# FASCICULE DE BREVET EUROPEEN

(11) **EP 0 937 750 B1**
(45) Date de publication et mention de la délivrance du brevet: **28.03.2007**
(21) Numéro de dépôt: 99400344.0
(22) Date de dépôt: 12.02.1999
(51) Int. Cl.: C08L 95/00, C08L 23/08, C08L 23/10, C08L 23/16

(54) **Compositions bitumineuses contenant des polyoléfines thermoplastiques et leurs utilisations**
Bitumenzusammensetzungen,die thermoplastische Polyolefine enthalten, und ihre Verwendungen
Bitumen compositions containing thermoplastic polyolefins and their uses

(30) Priorité: 19.02.1998 FR 9802013
(43) Date de publication de la demande: 25.08.1999
(73) Titulaire: TotalFinaElf France, 92800 Puteaux (FR); Institut Français du Pétrole, 92852 Rueil-Malmaison Cedex (FR)
(72) Inventeur: Lemoine, Guy, 76600 Le Havre (FR); Nicaud, Jacques, 78440 Gargenville (FR); Jarrin, Jacques, 92000 Nanterre (FR)
(74) Mandataire: Jolly, Jean-Pierre

(56) Documents cités:
- EP-A- 0 816 426
- WO-A-97/31065
- US-A- 3 395 110

## Description

La présente invention concerne des compositions comprenant des mélanges d'hydrocarbures lourds, tels que des bases bitumes, et des polymères du type des polyoléfines thermoplastiques, également dénommées compositions bitumineuses de type bitume-polymère, dans la suite de la présente description. L'invention concerne également la préparation de ces compositions et leurs applications dans l'industrie routière, notamment à la réalisation de chaussées, et dans d'autres industries, en particulier comme chapes d'étanchéité de toiture, panneaux d'isolation ou revêtements anti-corrosion.

Il est connu que les hydrocarbures lourds, désignés dans la suite de la présente description par le terme bitume(s), peuvent être produits, notamment, à partir du pétrole brut, par distillation de celui-ci et désasphaltage de la fraction lourde issue de la (ou des) distillation(s). Le bitume est constitué, selon l'origine du pétrole brut, de proportions variables d'huile paraffinique (aliphatique ou naphténique), aromatique, de résines et d'asphaltènes (on peut se reporter à ce sujet au brevet EP-B-246 956).

Selon sa constitution, le bitume peut présenter un caractère plus ou moins thermoplastique. Il se ramollit sous l'effet de la chaleur, son point de ramollissement appelé communément température "bille-anneau" (TBA), en raison de la méthode utilisée pour le déterminer (conformément à la norme NFT 66-008), pouvant varier selon le procédé d'obtention du bitume entre environ 30 et environ 130 °C.

Les comportements de ces bitumes peuvent être jugés insuffisants pour certaines applications, qui nécessitent soit de bonnes propriétés à froid, telles que :
- résistance au retrait et à la fissuration à froid, pour les couches anti-ornièrage des routes,
- pliabilité à froid, pour les matériaux d'étanchéité, soit encore des caractéristiques de maniabilité à chaud (viscosité maîtrisée) ou de tenue en température, comme :
- résistance au fluage à température élevée, dans l'application à la réalisation de chapes d'étanchéité ,
- comportement élastique ,
- tenue de certains mastics en température, lors de certains traitements (caisses d'automobiles).

Parmi les techniques connues pour améliorer la tenue en température d'un bitume, on peut citer notamment :
1) L'oxydation du bitume par la technique de soufflage par de l'air à environ 250 °C. Le produit ainsi obtenu peut présenter des températures "bille-anneau" élevées. Il est dur et plus cassant.
2) La modification du bitume par incorporation de polymères du type SBR (styrène-butadiène-rubber) ou SBS (styrène-butadiène-styrène), par exemple, vulcanisables ou non, en particulier à l'aide de soufre (ou de donneurs de soufre) ou de peroxydes. Cette technique nécessite des températures élevées et parfaitement contrôlées pendant des temps relativement longs. Le produit ainsi obtenu présente en outre une viscosité très élevée, difficilement compatible avec les procédés de mise en oeuvre de la profession. En outre, la vulcanisation apporte au bitume un caractère irréversible, peu favorable à une mise en oeuvre aisée.
3) La modification du bitume par incorporation de certains polymères de type polyoléfines, tels que, en particulier, le polyéthylène. Les températures "bille-anneau" du produit obtenu pouvant atteindre des valeurs de 110°C, ce produit présente des propriétés élastiques médiocres et une viscosité élevée.

Il est connu que, dans ce dernier cas, seul le polyéthylène de basse densité, c'est-à-dire inférieure à 0,93, peut être utilisé, car, seules les polyoléfines thermoplastiques de basse densité, de par leur faible cristallinité, peuvent être mélangées à des bitumes de façon homogène.

Or ces polyoléfines sont chères, et les réglementations en vigueur dans de nombreux pays incitent désormais les industriels à récupérer et/ou à recycler leurs déchets thermoplastiques, qui sont constitués de polyoléfines de diverses densités .

C'est dans ce souci du respect de l'environnement que certains industriels ont proposé d'incorporer ces déchets thermoplastiques dans les bitumes, pour les applications classiques de bitumes routiers ou industriels. On peut se référer par exemple au brevet FR-B- 2 658 524.

Cependant, du fait des problèmes exposés ci-dessus de miscibilité de certains polymères avec les bitumes, ces industriels sont contraints à utiliser seulement des polymères amorphes ou peu cristallins et de masse moléculaire adaptée, et ceci ne résout pas le problème que pose la récupération des déchets thermoplastiques de tous types.

C'est ainsi que WO 97/31065 décrit un mélange bitume-polymère, dont le polymère est choisi parmi :
a) un homopolymère de propylène essentiellement atactique,
b) un copolymère de propylène amorphe et d'alpha-oléfine en C4-C10, et
c) un copolymère de propylène amorphe et d'éthylène, les polymères a) et b) ayant une viscosité intrinsèque supérieure à 1 dl/g.

La teneur en polymères peut aller de 1 à 40 % en poids du mélange bitume-polymère.

Ces polymères sont tous pratiquement non cristallins.

EP-A - 0 816 426 décrit un procédé de fabrication de compositions thermoplastiques pour l'étanchéité, comprenant au moins un polymère thermoplastique pouvant être un copolymère d'éthylène (80 à 97 % en poids) et d'un comonomère, notamment de l'acrylate de n-butyl, du bitume et un ou plusieurs pigments, le mélange du polymère et du pigment se faisant avant l'introduction du bitume

Ce type de polymères correspond à des produits amorphes ou très faiblement cristallins.

US-A - 3 395 110 décrit une composition bitume-polymère comprenant de 1 à 20 % en poids d'un copolymère éthylène-propylène atactique, ayant une masse moléculaire en poids comprise entre 10 000 et 40 000.

Ce copolymère, obtenu par extraction au pentane, comme sous-produit de la fabrication de polymères de polypropylène isotactique, est amorphe.

Au cours de leurs travaux de recherche dans ce domaine, les Demanderesses ont établi que, de manière surprenante, il est possible d'incorporer dans les bitumes des polyoléfines jusqu'à présent considérées comme non incorporables dans les bitumes.

Le but de la présente invention est donc l'obtention de compositions bitumineuses de type bitume-polymère, en phase homogène, à partir de polyoléfines thermoplastiques à haute cristallinité, dont la masse moléculaire a été dégradée, ou de polyoléfines de masse moléculaire adaptée, permettant d'éviter les inconvénients de la technique antérieure.

A cet effet, l'invention a pour premier objet des compositions bitumineuses de type bitume-polymère, en mélange homogène, comprenant au moins une base bitume et préparées à partir d'au moins un polymère du type polyoléfine thermoplastique de masse moléculaire élevée, ces compositions étant caractérisées en ce qu'elles possèdent :
- une teneur d'au moins 1% en poids d'une polyoléfine thermoplastique, dont le taux de cristallinité est supérieur ou égal à 30%,
- une température de fusion supérieure ou égale à 110°C,
- et une pénétrabilité à 25°C inférieure ou égale à 300 dixièmes de millimètre.

Comme on le verra ci-après plus en détail, un avantage important de ces compositions est qu'elles présentent une bonne maniabilité à chaud, tout en ayant de bonnes propriétés à froid.

Au sens de la présente invention, la base bitume utilisable dans la composition de type bitume-polymère peut être un bitume, qui sera appelé ci-après bitume d'obtention classique, pour le différencier du bitume synthétique décrit plus loin. Ce bitume d'obtention classique est issu du pétrole brut, des schistes bitumineux, d'huiles lourdes, de sables bitumineux, etc, ou même de charbon.

Le bitume peut être, par exemple :
a) la fraction la plus lourde obtenue par distillation directe sous pression atmosphérique ou sous pression réduite du pétrole brut ;
b) la phase lourde obtenue par désasphaltage au solvant d'une fraction lourde obtenue selon les procédés décrits en a);
c) le produit de l'oxydation, en présence ou non de catalyseurs, d'une fraction lourde selon a), ou d'une phase lourde selon b) ;
d) le produit de l'oxydation, en présence ou non de catalyseurs, d'un mélange :
   - d'une fraction lourde selon a) ou d'une phase lourde selon b) et
   - d'un distillat, ou d'un extrait aromatique obtenu dans la désaromatisation des huiles lubrifiantes, ou d'un brai de désasphaltage ;
e) un mélange d'un produit oxydé obtenu selon b) ou c) ou d'une base dure, et d'un distillat, ou d'une huile désasphaltée, ou d'un extrait aromatique obtenu dans la désaromatisation des huiles lubrifiantes, ou d'un brai de désasphaltage, ou d'une fraction lourde selon a) ou d'une phase lourde selon b).

Le bitume utilisable peut être également un bitume synthétique ayant des caractéristiques voisines de celles d'un bitume d'obtention classique, tel que décrit ci-dessus, par exemple un liant synthétique clair colorable par addition de pigments.

Il peut s'agir par exemple de résines de pétrole, ou de résines indène-coumarone, en mélange avec des hydrocarbures aromatiques et/ou paraffiniques.

Les résines de pétrole peuvent être préparées par polymérisation d'hydrocarbures insaturés présents dans des fractions pétrolières insaturées, telles que les fractions obtenues par craquage thermique ou à la vapeur d'eau ou par pyrolyse.

Les résines indène-coumarone sont obtenues à partir des goudrons de houille.

Le polymère utilisable pour la mise en oeuvre de l'invention est une polyoléfine thermoplastique présentant des chaînes hydrocarbonées linéaires ou faiblement ramifiées et il peut être choisi avantageusement dans le groupe constitué par les polyéthylènes moyenne densité ou haute densité, supérieure à 0,93, les polypropylènes, ou des copolymères d'oléfines.

Les polyéthylènes comprennent les homopolymères et les copolymères de l'éthylène et d'un comonomère d'une α-oléfine, les polypropylènes comprennent les homopolymères du propylène et les copolymères avec l'éthylène, et les copolymères d'oléfines comprennent les copolymères d'éthylène et d'alcènes, riches en éthylène.

De préférence, la polyoléfine thermoplastique a une masse moléculaire moyenne en poids inférieure ou égale à 60 000.

Selon un mode de réalisation préférentiel, la polyoléfine thermoplastique est obtenue par dégradation partielle d'un polyéthylène haute densité ou d'un polypropylène.

Le taux de cristallinité mesuré par la méthode d'analyse calorimétrique différentielle (DSC) est supérieur ou égal à 50 % pour le polyéthylène et supérieur ou égal à 30 %, de préférence supérieur ou égal à 35 % pour le polypropylène.

La polydispersité du polymère obtenu, qui se définit par le rapport Mw/Mn de la masse moléculaire en poids Mw sur la masse moléculaire en nombre Mn dudit polymère, est réduite d'environ un facteur 3 par rapport à celle du polymère d'origine.

Selon l'invention, la polyoléfine d'origine que l'on dégrade possède une masse moléculaire moyenne en poids comprise entre 80 000 et 1 000 000 et, de préférence, entre 150 000 et 450 000. En outre, de manière avantageuse, les compositions bitumineuses ont une viscosité dynamique inférieure ou égale à 3000 mPa.s, mesurée à 180°C, et un taux de cisaillement de 50 s⁻¹, ainsi qu'une température bille-anneau supérieure ou égale à 30°C. Elles présentent aussi une énergie de fusion supérieure ou égale à 2 Joules/gramme et, en particulier, comprise entre 2 et 200 Joules/gramme.

Avantageusement, la concentration en polymère est comprise entre 1 et 95% en poids par rapport à la composition.

Selon un mode de réalisation avantageux de l'invention, pour des applications routières ou industrielles, la composition bitume-polymère peut contenir jusqu'à 30 % en poids de polymère de type polyoléfine thermoplastique, de préférence de 1 à 15 % en poids, en fonction de la nature du polymère et des qualités désirées pour l'utilisation visée.

Les polyoléfines d'origine possèdent une masse moléculaire moyenne en poids comprise entre 80 000 et 1 000 000 pour les polyéthylènes et entre 80 000 et 500 000 pour les polypropylènes, et une cristallinité mesurée par la méthode d'analyse calorimétrique différentielle (DSC), supérieure à 35%.

Les Demanderesses ont ainsi utilisé avec succès des polyéthylènes haute densité de très hautes masses moléculaires moyennes en poids, de l'ordre d'environ 150 000 à 450 000 et pouvant aller jusqu'à 1 000 000.

Le bitume est choisi, du point de vue de sa constitution, de manière à présenter une bonne compatibilité avec le polymère, en adaptant les rapports des hydrocarbures saturés, des aromatiques et des résines du bitume.

Pour obtenir une telle composition, comportant par exemple de 1 à 95 % en poids de polymère, il peut être avantageux de mettre en oeuvre un procédé de dégradation d'au moins une polyoléfine thermoplastique, effectué préalablement ou simultanément au mélange avec le bitume, à température élevée et en présence d'un catalyseur approprié, tel que décrit dans la demande de brevet français déposée le 22 avril 1997 sous le numéro 97 05050, par les Demanderesses.

La polyoléfine thermoplastique à dégrader est mélangée à la base bitume et à une préparation appropriée contenant au moins un catalyseur choisi parmi les solides minéraux contenant du cuivre ou ceux à base d'aluminium et de silicium, et présentant un caractère acide.

Ce catalyseur est en général mis en oeuvre en une proportion de 0,1 à 6 % en poids par rapport au poids de polyoléfine thermoplastique à dégrader.

L'opération de dégradation est effectuée à une température généralement comprise entre 200 et 600 °C, de préférence entre 250 et 375 °C.

Parmi les catalyseurs tels que définis ci-dessus, on peut utiliser notamment des argiles activées par un traitement acide, des silices-alumines acides ou des zéolithes acides, ou encore de l'oxyde cuivreux Cu₂O.

On peut réaliser l'opération de dégradation en l'absence de bitume, le produit de dégradation étant ensuite mélangé au bitume en une proportion appropriée pour l'application à laquelle le mélange bitume-polymère est destiné, et de toute façon à une température plus basse que la température de dégradation, par exemple à une température de l'ordre de 160 à 250°C.

On peut aussi effectuer la dégradation dans les conditions mentionnées plus haut, en présence d'une proportion de bitume qui peut varier largement, par exemple de 5 à 99 % en poids de bitume pour une proportion de 1 à 95 % en poids de la polyoléfine thermoplastique (catalyseur inclus).

On pourra plus particulièrement obtenir des mélanges bitume-polymère directement aux concentrations convenables pour les applications industrielles ou routières, en mettant en jeu une proportion de 75 à 99 % en poids de bitume pour une proportion de 1 à 25 % en poids de polyoléfine thermoplastique dégradée (catalyseur inclus).

Ainsi, en mettant en jeu des proportions de bitume allant par exemple de 10 à 40 % en poids pour des proportions de polyoléfine thermoplastique de 60 à 90 % en poids (catalyseur inclus), on obtiendra des mélanges concentrés en polymère dits "mélanges-maîtres". Ces mélanges présentent l'avantage de pouvoir être aisément stockés après avoir été refroidis et granulés. Ensuite, lors de leur utilisation, il suffit de les diluer à chaud dans des bitumes aux concentrations convenables pour les applications considérées.

Dans tous les cas, les proportions de polyoléfine thermoplastique dégradée que l'on retrouve dans la composition bitumineuse finale peuvent être :
- de 1 à 15 % en poids et, de préférence, d'environ 5% en poids, pour les applications routières, en particulier comme enrobés antiorniérants de revêtements de chaussées ou comme couches de liaison,
- et de 3 à 25 % en poids, de préférence entre 11 et 12% en poids, pour les applications industrielles telles que la réalisation de chapes d'étanchéité de toiture, de panneaux d'isolation thermique ou phonique et de revêtements anti-corrosion .

Par ailleurs, dans le cas où l'on souhaite améliorer les propriétés à froid des compositions bitumineuses de l'invention, telles que le point de Fraass ou la pliabilité à froid, en y introduisant des élastomères tels que les caoutchoucs de type SBS (styrène-butadiène-styrène) ou les polypropylènes atactiques, ceux-ci peuvent être incorporés soit lors de l'étape de dégradation de la polyoléfine thermoplastique, à température élevée, en présence du catalyseur, soit, de façon préférentielle, lors de la préparation par dilution du mélange final à plus basse température.

Dans la préparation des compositions bitumineuses de l'invention, le mélange de la polyoléfine thermoplastique et du catalyseur, éventuellement en présence de bitume, peut être effectué selon différentes techniques faisant appel soit à un réacteur ou à un malaxeur, pour les modes opératoires discontinus, soit à une extrudeuse mono-vis ou double vis, pour les modes opératoires en continu.

Par exemple, la dégradation du polymère à haute température et en présence de catalyseur permet de rendre miscible le polymère dans le bitume en agissant sur la masse moléculaire du polymère. Le polymère ainsi adapté présente une masse moléculaire moyenne en poids nettement inférieure à celle du polymère de départ, puisqu'elle atteint une valeur de l'ordre de 40 000 à 60 000 pour un polyéthylène ou un mélange de polyéthylènes, avec une faible polydispersité, qui, comme indiqué ci-dessus, est réduite d'environ un facteur 3 par rapport au polymère d'origine.

Les compositions de type bitume-polymère conformes à la présente invention sont particulièrement bien adaptées aux utilisations classiques des bitumes, notamment dans les applications routières, comme couches anti-ornièrage ou couches d'assise ou de liaison de chaussée, ainsi que dans des applications industrielles, dans la réalisation de chapes d'étanchéité de toitures, de panneaux d'isolation ou de revêtements anti-corrosion. Ces utilisations constituent un autre objet de la présente invention.

Par ailleurs, ces compositions peuvent trouver également une utilisation dans le domaine du traitement des déchets ultimes ménagers ou industriels, tels que les cendres d'incinération d'ordures ménagères (REFIOM), comme agents d'inertage et d'enrobage de ces déchets ultimes, avant leur stockage.

Les Exemples suivants illustrent l'invention, sans aucunement la limiter.

Dans les Exemples 1 à 4, on utilisera des compositions bitume-polymère conformes à l'invention, réalisées à partir d'un mélange-maître MM1 dont la préparation est décrite ci-après.

Cette préparation s'effectue par dégradation d'un polyéthylène en présence d'une proportion de base bitume relativement faible (30% en poids, par rapport au mélange total), et d'un catalyseur. On utilise une base bitume d'origine pétrolière dite base B, qui, utilisée seule, se révèle impropre pour les applications bitumes ci-dessus. Cette base B a les caractéristiques suivantes :
- viscosité cinématique à 100°C: 615 mm2/s,
- pénétrabilité à 25°C en 1/10mm, selon la norme NF-T-66004, : 500,
- point de ramollissement(température bille-anneau ou TBA, selon la norme NF-T 66008) : 24,5°C .

Le polyéthylène utilisé est un polyéthylène haute densité récupéré à partir de bidons d'huile déjà utilisés et broyés sous forme d'une poudre grossière, dont la plus faible dimension est de l'ordre de quelques millimètres. Avant transformation sous forme de bidons, ce polyéthylène est commercialisé sous l'appellation commerciale Lupolen 5021D® par la Société BASF. Ses caractéristiques sont les suivantes:
- densité: 0,949,
- indice de fluidité (melt flow index) mesuré à 190°C sous une charge de 2,16 kg selon la norme ASTM D 1238: 0,5g/10 mn,
- masse moléculaire moyenne en poids (1) : 150 000,
- masse moléculaire moyenne en nombre (1) : 20 000, (1) mesurée par chromatographie par perméation de gel.

Son taux de cristallinité mesuré par analyse calorimétrique différentielle(DSC) est de l'ordre de 50% et n'est pas sensiblement modifié après dégradation.

Afin de s'affranchir des conditions de refroidissement du polymère en fin de dégradation (passé thermique), le cycle suivant est imposé à chaque échantillon :
- montée en température de 50 à 200°C à un taux de 10°C/mn,
- palier de 5 mn à 200°C, puis descente de 200°C à 50°C à un taux de 20°C/mn, et palier de 5 mn à 50°C.

Sa dégradation s'effectue avec environ 3,5% en poids, par rapport à l'ensemble bitume plus polyéthylène, d'un catalyseur du type argile à base de montmorillonite(silicate d'aluminium hydraté ayant un rapport SiO₂/Al₂O₃ de 4/1), traitée par un acide minéral, vendue sous la marque Tonsil Optimum FF® par la Société Süd-Chemie et désignée ci-après par Tonsil®. On effectue le mélange dans un réacteur, sous agitation, à 350°C pendant 1 heure, de façon à obtenir un mélange-maître MM1. La masse moléculaire moyenne en poids du polyéthylène dégradé est d'environ 40 000. A titre indicatif, ce mélange-maître possède un point de fusion, mesuré selon la méthode interne de TOTAL d'analyse calorimétrique différentielle (DSC), de 126,4 °C, alors que le polyéthylène dégradé seul, avec le même catalyseur et dans les mêmes conditions, a un point de fusion de 130,9°C.

### EXEMPLE 1

Cet exemple concerne la préparation d'une composition de type bitume-polymère C1 selon l'invention.

On procède à la dilution de 2 % en poids du mélange-maître MM1 dans 98 % en poids de la base bitume B, à 190°C, sous agitation, pendant 1 heure. La composition C₁ ainsi obtenue est coulée sous forme de plaques de 2 mm d'épaisseur, dont on évalue l'aspect ainsi que certaines caractéristiques telles que :
- le point de ramollissement (ou température bille-anneau, TBA) mesuré selon la norme NF-T 66-008, en °C,
- la pénétrabilité à 25°C, en 1/10mm (mesurée selon la norme NF-T-66-004),
- le point de Fraass, en °C (mesuré selon la norme NF-T 66-026), qui indique la température à laquelle apparaît la fissuration d'un film de liant soumis à certaines contraintes mécaniques,
- la viscosité dynamique Contraves , en mPa.s, mesurée à 180°C et avec un taux de cisaillement de 50 s⁻¹, selon la méthode TOTAL 644, et
- l'énergie de fusion, mesurée en Joule/g, selon la méthode DSC.

Les résultats obtenus sont indiqués dans le Tableau 1 ci-après.

La composition C₁ présente un aspect lisse, homogène, qui traduit une très bonne dispersion du polyéthylène dans le bitume. En outre, elle possède une température bille-anneau ou TBA de 35°C, un point de Fraass de -23°C, une pénétrabilité à 25 °C de 213 dixièmes de mm, un point de fusion de 118,2°C et une énergie de fusion de 2,66 J/g.

Cet exemple montre que la composition C₁ selon l'invention possède des caractéristiques telles qu'elle correspond à une composition bitumineuse standard de TOTAL, classée V 180/220, dont les caractéristiques sont les suivantes:
- température "bille-anneau" (en °C) : entre 34 et 43,
- pénétrabilité à 25 °C (en 1/10 ème de mm) : entre 180 et 220,
- point de Fraass (en °C) : inférieur ou égal à - 13.

Or une telle composition, par incorporation de polymères du type SBS ou SBR, à des taux de 10 à 20 % en poids, qui permettent en particulier d'augmenter fortement sa TBA, se voit conférer une bonne tenue en température, ce qui lui permet d'être utilisée comme base pour réaliser des chapes d'étanchéité, en particulier pour toitures.

### EXEMPLE 2

Cet exemple concerne la préparation d'une composition C2 selon l'invention.

Cette composition est préparée à partir du même mélange-maître MM1 que celui de l'exemple 1.

On procède au mélange de 5% en poids du mélange-maître MM1 et de 95% en poids d'une base bitume dite base A , qui est un résidu sous vide de distillation directe d'un pétrole brut de type ARAMCO et qui présente une viscosité cinématique, à 100°C, de 625 mm²/s et un point de ramollissement de 23°C; cette base, utilisée seule, est impropre pour les applications bitumes.

La composition C2 ainsi obtenue est façonnée en plaques de 2 mm d'épaisseur, de manière à observer son aspect, qui est homogène, et à en déterminer la température "bille-anneau", qui est de 43,5°C, son point de Fraass, égal à -27 °C, sa pénétrabilité à 25 °C, égale à 190 dixièmes de mm, sa viscosité Contraves, de 95 mPa.s, son point de fusion, égal à 121,2°C, et son énergie de fusion, de 6,35 J/g.

On a ainsi obtenu une composition possédant des caractéristiques voisines de celles d'une base bitume standard de TOTAL, classée V 180/220, pouvant servir de base pour les mêmes applications industrielles que dans l'exemple précédent.

### EXEMPLE COMPARATIF 2

Cet exemple concerne la préparation d'une composition bitume-polymère de l'art antérieur, obtenue en mélangeant 96,5% en poids de la même base A que dans l'Exemple 2, avec 3,5 % en poids d'un polyéthylène basse densité (référence PEBD, dans le Tableau 1 ci-après), commercialisé sous la référence Lacqtene 1020® par la Société Atochem, de façon à avoir la même teneur en polymère que dans l'Exemple 2.

Ses caractéristiques sont les suivantes:
- densité : 0,924,
- indice de fluidité (melt flow index) mesuré à 190°C, sous une charge de 2,16 kg, selon la norme ASTM D 1238 : 2 g/10 mn,
- masse moléculaire moyenne en poids: 50 000, mesurée par chromatographie par perméation de gel.

La composition ainsi obtenue, à 190°C sous agitation pendant 1 heure, est façonnée en plaques de 2 mm d'épaisseur, dont l'aspect n'est pas homogène. Sa température "bille-anneau" est de 44 °C, sa pénétrabilité à 25 °C de 175 dixièmes de mm, sa viscosité Contraves de 86 mPa.s, son point de fusion de 86,7°C et son énergie de fusion de 3,64 J/g.

On a donc obtenu une composition possédant des caractéristiques voisines de celles de la base bitume standard de l'exemple précédent, mais cependant avec une mauvaise homogénéité, qui entraînera donc des problèmes de mise en oeuvre.

### EXEMPLE 3

Cet exemple concerne la préparation d'une composition bitume-polymère C3 selon l'invention.

On part du même mélange-maître MM1, dont on mélange 16,5% en poids avec 83,5% en poids d'une base bitume standard classée V 180/220.

La composition C3 obtenue présente une température bille-anneau de 122°C et une pénétrabilité de 18 dixièmes de mm, ce qui la situe au même niveau de performance qu'une base bitume oxydé classée 120/25 (TBA /pénétrabilité), utilisée dans la fabrication de revêtements de toiture (Shingles). Elle possède en outre une viscosité Contraves de 930 mPa.s, un point de fusion de 121,3 °C et une énergie de fusion de 22,27 J/g. On obtient donc une composition qui résiste au fluage à température élevée, tout en ayant une viscosité adaptée.

### EXEMPLE COMPARATIF 3

Cet exemple concerne la préparation d'une composition bitume-polymère de l'art antérieur, obtenue en mélangeant 88,5% en poids de la même base bitume V 180/220 que dans l'Exemple 3 avec 11,5 % en poids du même polyéthylène basse densité (référence PEBD dans le Tableau 1 ci-après), commercialisé sous la référence Lacqtene 1020® par la Société Atochem, de façon à avoir la même teneur en polymère que dans l'Exemple 3.

Son mélange sous agitation à 190 °C n'est pas homogène. Sa température bille-anneau, qui est de 85 °C, chute nettement par rapport à celle de l'exemple 3, et sa pénétrabilité passe à 43 dixièmes de mm, ce qui ne permet pas à cette composition de pouvoir se substituer à une base bitume oxydé classée 120/25 (TBA/pénétrabilité), pour des applications industrielles telles que les revêtements de toiture.

### EXEMPLE 4

Cet exemple concerne la préparation d'une composition bitume-polymère C4 selon l'invention.

On part du même mélange-maître MM1, dont on mélange 10% en poids avec 90% en poids de la base bitume dite base A, définie dans l'Exemple 2, qui est une base impropre aux applications bitumes recherchées. Après façonnage de la composition obtenue en plaques de 2 mm d'épaisseur et vérification de leur aspect homogène, les caractéristiques suivantes sont mesurées:
- température bille-anneau: 120°C,
- pénétrabilité: 65 dixièmes de mm,
- point de Fraass: -19°C,
- viscosité Contraves: 200 mPa.s,
- point de fusion: 121, 3°C,
- énergie de fusion: 12,74J/g.

Cet exemple montre bien que la dilution d'un mélange-maître selon l'invention dans une base bitume impropre aux applications envisagées permet d'obtenir un bitume modifié ayant certaines des caractéristiques des bitumes routiers commerciaux et, ici, notamment, d'un bitume V 50/70 de TOTAL, dont les caractéristiques sont les suivantes :
- température "bille-anneau" ou TBA (en °C) : entre 45 et 51,
- pénétrabilité à 25 °C (en 1/10 ème de mm) : entre 50 et 70.

On notera les valeurs élevées de la température de ramollissement (TBA =120°C), ainsi que les bonnes propriétés à froid de la composition C4 conforme à l'invention, qui présente donc des caractéristiques telles qu'elle peut être utilisée pour réaliser des enrobés à chaud pour des applications routières.

Les caractéristiques des compositions des exemples 1 à 4 et des exemples comparatifs 2 et 3 précédents, sont réunies dans le TABLEAU 1 ci-après.

**TABLEAU 1**

| Exemple | 1 | 2 | Comp.2 | 3 | Comp.3 | 4 |
|---|---|---|---|---|---|---|
| Bitume | Base B | Base A | Base A | V180/220 | V180/220 | Base A |
| (% en poids) | 98 | 95 | 96,5 | 83,5 | 88,5 | 90 |
| Mélange-maître | MM1 | MM1 | - | MM1 | - | MM1 |
| (% en poids) | 2 | 5 | - | 16,5 | - | 10 |
| PEBD | - | - | 3,5 | - | 11,5 | - |
| (% en poids) | | | | | | |
| Aspect plaque à 190°C | homogène | homogène | non homogène | homogène | non homogène | homogène |
| TBA (°C) | 35 | 43,5 | 44 | 122 | 85 | 120 |
| Pénétrabilité (en 1/10mm) | 213 | 190 | 175 | 18 | 43 | 65 |
| T Frass (°C) | -23 | -27 | - | - | - | -19 |
| Pliabilité à froid (°C) | - | - | -5 | - | 5 | - |
| Viscosité à 180° C, 50s⁻¹ (en mPa.s) | 48 | 95 | 86 | 930 | 700 | 200 |
| Point de Fusion (°C) | 118,2 | 121,2 | 86,7 | 122,7 | 87,9 | 121,3 |
| Energie de fusion (J/g) | 2,66 | 6,35 | 3,64 | 22,27 | 11,25 | 12,74 |

### EXEMPLE 5

On procède à la préparation d'un mélange-maître MM2, par dégradation d'un polypropylène isotactique commercialisé sous la référence HOSTALEN PPK 1032® par la Société Hoechst, de masses moléculaires moyennes, déterminées par chromatographie par perméation de gel, de 380 000 pour la masse moléculaire en poids et de 103 000 pour la masse moléculaire en nombre, en présence de 1% en poids d'un catalyseur d'oxyde cuivreux et en mélange avec une base bitume B, à raison de 70% en poids de polypropylène, par rapport au poids total du mélange.

On opère dans un malaxeur à une vitesse de rotation de 200 tours/mn et à 300°C pendant 30 minutes.

Le polypropylène dégradé obtenu a une masse moléculaire moyenne en poids d'environ 57 000.

A partir de ce mélange-maître MM2, on produit une composition C5 en mélangeant 20% en poids de MM2 avec 80% d'un bitume commercial, référencé V 110/130 EXP202, ayant une pénétrabilité de 110-130 dixièmes de mm et un point de ramollissement ou TBA de 43°C, dans un mélangeur Rayneri, à 180°C .

La composition C5 ainsi obtenue est façonnée à 190°C en plaques de 2 mm d'épaisseur, de manière à observer son aspect, qui est homogène, et à déterminer sa température "bille-anneau" TBA, qui est de 154 °C, et sa pénétrabilité, qui est de 16 dixièmes de mm. Un test de pliabilité à froid, selon la méthode interne TOTAL 587, donne une valeur de -5°C. Sa viscosité Contraves est de 480 mPa.s, son point de fusion est de 151 °C et son énergie de fusion de 7,1 J/g.

La composition C5 selon l'invention présente une température "bille-anneau" élevée, lui conférant une bonne tenue en température, et une bonne rigidité, ce qui permet de l'utiliser pour la réalisation de panneaux d'insonorisation ou de chapes d'étanchéité, et de remplacer des compositions de bitume et de polypropylène atactique, utilisé à des taux de 20 à 30 % en poids .

### EXEMPLE COMPARATIF 5

Cet exemple concerne la préparation d'une composition bitume-polymère de l'art antérieur, obtenue en mélangeant 86% en poids du même bitume commercial que dans l'Exemple 5, référencé V 110/130 EXP202, avec 14 % en poids d'un polypropylène atactique(référence APP dans le Tableau 2 ci-après), qui est une polyoléfine amorphe et est commercialisé sous la référence Vestoplast® par la Société Hüls, de façon à avoir la même teneur en polymère que dans l'Exemple 5.

Son mélange sous agitation à 190 °C est à la limite de l'homogènéité.

Sa température bille-anneau, qui est de 97 °C, chute nettement par rapport à celle de l'exemple 5 (Δ T= 57°C), et sa pénétrabilité passe à 47 dixièmes de mm.

De telles caractéristiques ne permettent pas à cette composition d'être substituée à la précédente pour les mêmes applications industrielles.

### EXEMPLE 6

A partir du mélange-maître MM2 précédent, on réalise une composition C6 par mélange de 11,5% en poids de MM2 avec 88,5% de la base bitume B, dans les mêmes conditions que dans l'Exemple 5.

La température "bille-anneau" TBA de la composition C6 est de 151 °C, sa pénétrabilité est de 37 dixièmes de mm, son point de fusion de 150,2°C, son énergie de fusion de 6,7 J/g et sa viscosité Contraves de 74 mPa.s. Sa pliabilité à froid est de -5°C. Cette composition C6 peut donc être utilisée pour la même application que celle de l'Exemple 5.

### EXEMPLE COMPARATIF 6

Cet exemple concerne la préparation d'une composition bitume-polymère de l'art antérieur, obtenue en mélangeant 92% en poids de la même base bitume B avec 8 % en poids du même polypropylène atactique que celui de l'Exemple comparatif 5 (référence APP dans le Tableau 2 ci-après), de façon à avoir la même teneur en polymère que dans l'Exemple 6.

Son mélange sous agitation à 190 °C ne donne pas une bonne homogénéité.

Sa température bille-anneau, qui est de 62 °C, chute encore plus nettement par rapport à celle de l'Exemple 6 (Δ T= 89°C), et sa pénétrabilité passe à 105 dixièmes de mm, ce qui ne permet pas à cette composition d'être substituée à la précédente pour les mêmes applications industrielles.

Les caractéristiques des compositions des Exemples 5 et 6 et des Exemples comparatifs 5 et 6 sont réunies dans le Tableau 2 ci-après.

**TABLEAU 2**

| Exemple | 5 | Comp.5 | 6 | Comp.6 |
|---|---|---|---|---|
| Bitume (% en poids) | V110/130 80 | V110/130 86 | Base B 88,5 | Base B 92 |
| Mélange-maître (% en poids) | MM2 | - | MM2 | - |
| | 20 | - | 11,5 | - |
| APP % poids | - | 14 | - | 8 |
| Aspect plaque à 190°C | homogène | limite homogène | homogène | non homogène |
| TBA (°C) | 154 | 97 | 151 | 62 |
| Pénétrabilité (en 1/10mm) | 16 | 47 | 37 | 105 |
| Pliabilité à froid (°C) | -5 | 5 | -5 | -5 |
| viscosité à 180°C, 50s⁻¹ (en mPa.s) | 480 | 500 | 74 | 110 |
| Point de fus ion (°C) | 151 | 144,4 | 150,2 | 139,7 |
| Energie de fusion (J/g) | 7,10 | 1,29 | 6,70 | 1,33 |

## Revendications

1. Compositions bitumineuses de type bitume-polymère, en phase homogène, comprenant au moins une base bitume et au moins 1 % en poids d'une polyoléfine thermoplastique dont le taux de cristallinité mesuré par analyse calorimétrique différentielle (DSC), est supérieur ou égal à 30 %, ladite polyoléfine thermoplastique ayant une masse moléculaire moyenne en poids inférieure ou égale à 60 000, et ayant été obtenue par dégradation partielle d'une polyoléfine de masse moléculaire moyenne en poids comprise entre 80 000 et 1 000 000à une température comprise entre 200°C et 600°C en présence d'un catalyseur choisi parmi les solides minéraux contenant du cuivre ou les solides minéraux à base d'aluminium et de silicium présentant un caractère acide,
lesdites compositions présentant
- une température de fusion, mesurée par analyse calorimétrique différentielle (DSC), supérieure ou égale à 110 °C, et
- une pénétrabilité à 25 °C, mesurée selon la norme NF-T 66-004, inférieure ou égale à 300 dixièmes de millimètres.

2. Compositions bitumineuses selon la revendication 1, **caractérisées en ce que** la polyoléfine thermoplastique est choisie parmi le groupe constitué par les polyéthylènes moyenne densité ou haute densité, les polypropylènes, ou les copolymères d'oléfines.

3. Compositions bitumineuses selon l'une des revendications 1 à 2, **caractérisées en ce que** le polymère est obtenu par dégradation partielle d'une polyoléfine telle qu'un polyéthylène haute densité ou un polypropylène.

4. Compositions bitumineuses selon l'une des revendications 1 à 3, **caractérisées en ce que** la polyoléfine est un polyéthylène dont le taux de cristallinité est supérieur ou égal à 50 %.

5. Compositions bitumineuses selon l'une des revendications 1 à 3, **caractérisées en ce que** la polyoléfine est un polypropylène dont le taux de cristallinité est supérieur ou égal à 30 % et, de préférence, supérieur ou égal à 35 %.

6. Compositions bitumineuses selon l'une des revendications 3 à 5, **caractérisées en ce que** la polydispersité du polymère dégradé est réduite d'environ un facteur 3 par rapport au polymère d'origine.

7. Compositions bitumineuses selon l'une des revendications 3 à 6, **caractérisées en ce que** la polyoléfine d'origine qui a été dégradée possède une masse moléculaire moyenne en poids comprise entre 80 000 et 1 000 000, et de préférence entre 150 000 et 450 000.

8. Compositions bitumineuses selon l'une des revendications précédentes, **caractérisées en ce qu'**elles ont une viscosité dynamique inférieure ou égale à 3000 mPa.s, mesurée à 180°C et à un taux de cisaillement de 50 s⁻¹.

9. Compositions bitumineuses selon l'une des revendications précédentes, **caractérisées en ce que** leur température bille-anneau mesurée selon la norme NF-T 66-008 est supérieure ou égale à 30°C.

10. Compositions bitumineuse selon l'une des revendications précédentes, **caractérisées en ce qu'**elles présentent une énergie de fusion mesurée par analyse calorimétrique différentielle supérieure ou égale à 2 Joules/gramme, et en particulier comprise entre 2 et 200 Joules/gramme.

11. Utilisation de compositions bitumineuses selon l'une des revendications précédentes, ayant une teneur comprise entre 1 et 15% en poids de polyoléfine thermoplastique, dans les applications routières, comme enrobés anti-orniérants ou comme couches de liaison de chaussée.

12. Utilisation des compositions bitumineuses selon l'une des revendications 1 à 11, ayant une teneur comprise entre 3 et 25% en poids de polyoléfine thermoplastique, dans des applications industrielles, pour la réalisation de chapes d'étanchéité de toitures, de panneaux d'isolation et d'insonorisation, ou de revêtements anti-corrosion.

## Claims

1. Bituminous compositions of the bitumen/polymer type, in homogeneous phase, comprising at least one bitumen base and at least 1% by weight of a thermoplastic polyolefin whose degree of crystallinity, measured by differential calorimetric analysis (DSC), is greater than or equal to 30%, said thermoplastic polyolefin having a weight average molecular mass less than or equal to 60,000 and having been obtained by partial degradation of a polyolefin of a weight average molecular mass of between 80,000 and 1,000,000 at a temperature of between 200°C and 600°C in the presence of a catalyst selected from among copper-containing inorganic solids or aluminium- and silicon-based inorganic solids of acidic nature,
said compositions having
- a melting point, measured by differential calorimetric analysis (DSC), greater than or equal to 110°C, and
- a penetrability at 25°C, measured to standard NF-T 66-004, less than or equal to 300 tentlis of a millimetre.

2. Bituminous compositions according to claim 1, **characterised in that** the thermoplastic polyolefin is selected from among the group consisting of medium or high density polyethylenes, polypropylenes or olefin copolymers.

3. Bituminous compositions according to either one of claims 1 to 2, **characterised in that** the polymer is obtained by partial degradation of a polyolefin such as a high density polyethylene or a polypropylene.

4. Bituminous compositions according to any one of claims 1 to 3, **characterised in that** the polyolefin is a polyethylene whose degree of crystallinity is greater than or equal to 50%.

5. Bituminous compositions according to any one of claims 1 to 3, **characterised in that** the polyolefin is a polypropylene, whose degree of crystallinity is greater than or equal to 30% and, preferably, greater than or equal to 35%.

6. Bituminous compositions according to any one of claims 3 to 5, **characterised in that** the polydispersity of the degraded polymer is reduced by approximately a factor of 3 relative to the original polymer.

7. Bituminous compositions according to any one of claims 3 to 6, **characterised in that** the original polyolefin which has been degraded has a weight average molecular mass of between 80,000 and 1,000,000 and preferably between 150,000 and 450,000.

8. Bituminous compositions according to any one of the preceding claims, **characterised in that** they have a dynamic viscosity less than or equal to 3000 mPa·s, measured at 180°C and a shear rate of 50 s⁻¹.

9. Bituminous compositions according to any one of the preceding claims, **characterised in that** their ball and ring temperature, measured to standard NF-T 66-008, is greater than or equal to 30°C.

10. Bituminous compositions according to any one of the preceding claims, **characterised in that** they exhibit a heat of fusion, measured by differential calorimetric analysis, greater than or equal to 2 joules/gram, and in particular between 2 and 200 joules/gram.

11. Use of bituminous compositions according to any one of the preceding claims, having a content of between 1 and 15% by weight of thermoplastic polyolefin, in road applications, as anti-rutting paving mixes or as pavement binder courses.

12. Use of the bituminous compositions according to any one of claims 1 to 11, having a content of between 3 and 25% by weight of thermoplastic polyolefin, in industrial applications, for making waterproof roofing membranes, insulating and sound-proofing panels or anticorrosion coatings.

## Patentansprüche

1. Bituminöse Zusammensetzungen vom Bitumen-PolymerTyp in homogener Phase, die mindestens eine Bitumenbasis und mindestens 1 Gew.-% eines durch partiellen Abbau eines Polyolefins mit einem gewichtsmittleren Molekulargewicht zwischen 80.000 und 1.000.000 bei einer Temperatur zwischen 200°C und 600°C in Gegenwart eines unter Kupfer enthaltenden anorganischen Feststoffen oder anorganischen Feststoffen auf Basis von Aluminium und Silicium mit saurem Charakter ausgewählten Katalysators erhaltenen thermoplastischen Polyolefins mit einem durch differentialkalorimetrische Analyse (DSC) gemessenen Kristallinitätsgrad von mindestens 30%, einem gewichtsmittleren Molekulargewicht von höchstens 60.000 enthalten und
- eine durch differentialkalorimetrische Analyse (DSC) gemessene Schmelztemperatur von mindestens 110°C und
- eine gemäß der NF-T-Norm 66-004 gemessene Penetration bei 25°C von höchstens 300 Zehntelmillimeter aufweisen.

2. Bituminöse Zusammensetzungen nach Anspruch 1, **dadurch gekennzeichnet, daß** das thermoplastische Polyolefin aus der Gruppe bestehend aus Polyethylenen mittlerer oder hoher Dichte, Polypropylenen oder Olefincopolymeren stammt.

3. Bituminöse Zusammensetzungen nach Anspruch 1 oder 2, **dadurch gekennzeichnet, daß** das Polymer durch partiellen Abbau eines Polyolefins wie eines Polyethylens hoher Dichte oder eines Polypropylens erhalten wird.

4. Bituminöse Zusammensetzungen nach einem der Ansprüche 1 bis 3, **dadurch gekennzeichnet, daß** es sich bei dem Polyolefin um ein Polyethylen mit einem Kristallisationsgrad von mindestens 50% handelt.

5. Bituminöse Zusammensetzungen nach einem der Ansprüche 1 bis 3, **dadurch gekennzeichnet, daß** es sich bei dem Polyolefin um ein Polypropylen mit einem Kristallisationsgrad von mindestens 30% und vorzugsweise mindestens 35% handelt.

6. Bituminöse Zusammensetzungen nach einem der Ansprüche 3 bis 5, **dadurch gekennzeichnet, daß** die Polydispersität des abgebauten Polymers gegenüber dem Ausgangspolymer um einen Faktor von ungefähr 3 verringert wird.

7. Bituminöse Zusammensetzungen nach einem der Ansprüche 3 bis 6, **dadurch gekennzeichnet, daß** das Ausgangspolyolefin, das abgebaut worden ist, ein gewichtsmittleres Molekulargewicht zwischen 80.000 und 1.000.000 und vorzugsweise zwischen 150.000 und 450.000 aufweist.

8. Bituminöse Zusammensetzungen nach einem der vorhergehenden Ansprüche, **dadurch gekennzeichnet, daß** sie eine bei 180°C und einer Scherrate von 50 s⁻¹ gemessene dynamische Viskosität von höchstens 3000 mPa.s aufweisen.

9. Bituminöse Zusammensetzungen nach einem der vorhergehenden Ansprüche, **dadurch gekennzeichnet, daß** sie einen gemäß der NF-T-Norm 66-008 gemessenen Ring-und-Kugel-Erweichungspunkt von mindestens 30°C aufweisen.

10. Bituminöse Zusammensetzungen nach einem der vorhergehenden Ansprüche, **dadurch gekennzeichnet, daß** sie eine durch differentialkalorimetrische Analyse gemessene Schmelzenergie von mindestens 2 Joule/Gramm und insbesondere zwischen 2 und 200 Joule/Gramm aufweisen.

11. Verwendung von bituminösen Zusammensetzungen nach einem der vorhergehenden Ansprüche mit einem Gehalt an thermoplastischem Polyolefin zwischen 1 und 15 Gew.-% bei Straßenbauanwendungen als der Spurrinnenbildung entgegenwirkende Straßendecken oder als Straßenbelagsbindemittelschichten.

12. Verwendung von bituminösen Zusammensetzungen nach einem der vorhergehenden Ansprüche mit einem Gehalt an thermoplastischem Polyolefin zwischen 3 und 25 Gew.-% bei industriellen Anwendungen zur Herstellung von Dachabdichtungen, Isolier- und Schalldämmplatten oder Korrosionsschutzüberzügen.
